# EUROPÄISCHE PATENTSCHRIFT

(11) **EP 1 196 977 B1**
(45) Veröffentlichungstag und Bekanntmachung des Hinweises auf die Patenterteilung: **04.02.2004**
(21) Anmeldenummer: 00993666.7
(22) Anmeldetag: 13.12.2000
(51) Int. Cl.: F01D 11/00

(54) **BÜRSTENDICHTUNG**
BRUSH SEAL
JOINT BROSSE

(30) Priorität: 23.12.1999 DE 19962316
(43) Veröffentlichungstag der Anmeldung: 17.04.2002
(73) Patentinhaber: MTU Aero Engines GmbH, 80995 München (DE)
(72) Erfinder: GAIL, Alfons, 86316 Friedberg (DE); WERNER, Klemens, 80999 München (DE)
(74) Vertreter: Zacharias, Frank L.
(86) Internationale Anmeldenummer: PCT/DE2000/004421
(87) Internationale Veröffentlichungsnummer: WO 2001/048887

(56) Entgegenhaltungen:
- DE-A- 19 618 475
- DE-A- 19 803 502
- US-A- 5 758 879

## Beschreibung

Die Erfindung betrifft eine Bürstendichtung, zum Abdichten eines Rotors gegen einen Stator umfassend ein am Rotor oder Stator gehaltenes, eine Stützplatte aufweisendes Borstengehäuse zur Befestigung von Borsten, die mit ihren freien Enden zum Stator oder Rotor ausgerichtet sind.

Bei bekannten Bürstendichtungen laufen die freien Enden der in einem eine Front- und eine Stützplatte aufweisenden Borstengehäuse befestigten Borsten gegen eine Dichtfläche vom Rotor oder Stator und dichten so einen Spalt zwischen Rotor und Stator ab. Beim Einsatz in stationären Gasturbinen oder Flugtriebwerken läßt sich mit derartigen Bürstendichtungen bei guter Dichtwirkung bei üblicher Anordnung axialer Bauraum gegenüber alternativ einsetzbaren Dichtungen, wie Labyrinthdichtungen, einsparen.

Aus der DE 196 18 475 A1 ist eine Bürstendichtung bekannt, deren Borsten zur Verringerung der radialen Baulänge abgewinkelt sind. Um die höhere Steifigkeit der kurzen, abgewinkelten Borstenabschnitte zu verbessern, ist ein im Bereich der Schaftabschnitte der Borsten liegender Anschlag vorgesehen, der als Biegekante wirkt, wenn die elastischen Borsten infolge einer Exzentrizität des Rotors ausgelenkt werden. Auf diese Weise lässt sich die Steifigkeit der Borsten ohne unzulässig großen, radialen Bauraum einstellen.

Beim Betrieb tritt an der Dichtfläche des Rotors bzw. Stators infolge des Kontakts mit den im allgemeinen aus Stahl bestehenden Borsten eine den Verschleiß erhöhende lokale Temperaturerhöhung auf. Zudem könnte die zwischen den Borsten stets auftretende, geringe Leckage verringert werden.

Das der vorliegenden Erfindung zugrundeliegende Problem besteht darin, eine Bürstendichtung der eingangs beschriebenen Gattung bereitzustellen, bei der die Dichtwirkung und das Verschleißverhalten der Borsten weiter verbessert ist.

Die Lösung des Problems ist erfindungsgemäß dadurch gekennzeichnet, dass die freien Enden der Borsten mit einem Gleitring zum Abdichten des Rotors gegen den Stator versehen sind.

Die Vorteile liegen in der Kombination der hohen Elastizität einer Bürstendichtung, durch die sich der an den freien Enden der Borsten befestigte Gleitring ohne weiteres bei im allgemeinen radialen Auslenkungen des Rotors oder Stators von z.B. 0,2 bis 0,8 mm (beim Anlaufen der Gasturbine) anpassen kann, und den hervorragenden Gleiteigenschaften des Gleitrings, der gegen die Dichtfläche am Rotor bzw. Stator läuft und so den Spalt zwischen Rotor und Stator flächig abdichtet. Infolgedessen wird eine im Spaltbereich im allgemeinen vorhandene Leckage durch die Borsten einer Bürstendichtung vermieden. Aufgrund der z.B. im Vergleich zu Borsten aus Stahl besseren Gleiteigenschaften des Gleitring tritt an der Dichtfläche am Rotor bzw. Stator ein geringerer Verschleiß und eine geringere Temperaturerhöhung auf. Der Gleitring besteht aus einem Material, das bessere Gleiteigenschaften als die aus Stahl bestehenden Borsten der Bürstendichtung aufweist. Infolgedessen erfolgt auch das Abstützen des Gleitrings an der niederdruckseitigen Stützplatte bei anliegendem Differenzdruck vorteilhaft, ohne dass dort ein Verhaken od. dgl. der Borsten auftritt.

Der Gleitring kann aus Kohle bestehen, da sich ein Kohlering auch bei den in stationären Gasturbinen oder Flugtriebwerken auftretenden hohen Temperaturen einsetzen läßt und Kohle bessere Gleiteigenschaften als Stahl, aus dem die Borsten bestehen, besitzt. Alternativ kann der Gleitring z.B. auch aus einem Sintermetall mit Gleiteigenschaften bestehen.

Der Gleitring kann einstückig ausgebildet oder segmentiert sein. Bei einem segmentierten Gleitring verlaufen die Trennlinien zwischen den einzelnen Gleitringabschnitten bei einem in üblicher Weise in Axialrichtung der Gasturbine ausgerichteten Rotor in Radialrichtung und sind entlang des Umfangs des Gleitrings äquidistant angeordnet. Mit einem segmentierten Gleitring läßt sich die Elastizität insbesondere bei einer Gleitring-Bürstendichtung verbessern, bei welcher die Borsten von ihrer Befestigung am Borstendichtungsgehäuse geradlinig auf den Rotor oder Stator verlaufen, wobei die geradlinigen Borsten je nach Anwendungsfall in einem Winkel von 0 ° bis 45 ° zur Radialen angestellt sein können. Insbesondere bei zur Radialen angestellten Borsten besteht bei Einsatz des Gleitrings ein weiterer Vorteil darin, dass eine Drehrichtungsumkehr des Rotors ohne weiteres möglich ist.

Der Gleitring kann an die freien Enden der Borsten gesintert sein, was z.B. mit Kohlepulver od. dgl. erfolgen kann.

Alternativ kann der Gleitring an seiner äusseren Umfangsfläche eine Aussparung aufweisen, in der die freien Enden der Borsten aufgenommen und z.B. durch Löten befestigt sind.

Abschließend kann der Gleitring an seiner gegen die Dichtfläche am Rotor bzw. Stator laufenden inneren oder äußeren Umfangsfläche durch Schleifen od. dgl. zur Verbesserung der Oberflächenqualität bearbeitet werden. Ebenso kann der Gleitring an seiner sich insbesondere bei anliegendem Differenzdruck an der Stützplatte abstützenden Seitenfläche durch Schleifen od. dgl. zur Verbesserung der Oberflächenqualität bearbeitet werden.

Zur Einsparung von Bauraum können die Borsten im Borstengehäuse befestigte Schaftabschnitte und dazu abgewinkelte Borstenabschnitte umfassen, deren freien Enden zum Rotor oder Stator ausgerichtet sind, wobei in einem solchen Fall die Stützplatte eine zu den Schaftabschnitten der Borsten im wesentlichen parallelen Längsabschnitt und einen dazu abgewinkelten und zu den abgewinkelten Borstenabschnitten im wesentlichen parallelen Stützabschnitt aufweist.

Zur Verbesserung der Elastizität einer Bürstendichtung mit abgewinkelten, die freien Enden der Borsten aufweisenden Borstenabschnitten kann zwischen den Schaftabschnitten der Borsten und der Stützplatte ein Biegefreiraum mit einem als Biegekante wirkenden Anschlag vorgesehen sein. Auf diese Weise passt sich der an den freien Enden der Borsten vorgesehene Gleitring etwaigen Auslenkungen des Rotors oder Stators von etwa 0,2 bis 0,7 mm, z.B. beim Anlaufen einer stationären Gasturbine oder eines Flugtriebwerks, an. Die die freien Enden der Borsten aufweisenden, abgewinkelten Borstenabschnitte und der abgewinkelte Stützabschnitt der Stützplatte können im wesentlichen rechtwinklig zu den Schaftabschnitten der Borsten bzw. dem Längsabschnitt der Stützplatte abgewinkelt sein.

Die Borsten können zur weiteren Verbesserung der Dichtwirkung, insbesondere für den Einsatz der Bürstendichtung in einer feuchten Umgebung, wie Wasserdampf, in einer Silicon-, Silicard- oder Teflondispersion od.dgl. getränkt sein, da sich Silicon, Silicard und Teflon an den Borsten anlagert, dazwischenliegenden Freiräume im wesentlichen schließt, die Borsten jedoch, in gewissen Grenzen, beweglich und elastisch bleiben. Die verwendeten Mittel sind in Abhängigkeit von den auftretenden Temperaturen auszuwählen.

Weitere Ausgestaltungen der Erfindung sind in den Unteransprüchen beschrieben.

Im folgenden wird die Erfindung anhand von Ausführungsbeispiel unter Bezugnahme auf eine Zeichnung näher erläutert. Es zeigt:
- Fig. 1: eine Querschnittsansicht eines Ausführungsbeispiels der erfindungsgemäßen Bürstendichtung;
- Fig. 2: eine Querschnittsansicht eines alternativen Ausführungsbeispiels der erfindungsgemäßen Bürstendichtung;
- Fig. 3: eine Querschnittsansicht eines abgewinkelte Borstenabschnitte aufweisenden Ausführungsbeipiels der erfindungsgemäßen Bürstendichtung;
- Fig. 4: eine Querschnittsansicht eines anderen abgewinkelte Borstenabschnitte aufweisenden Ausführungsbeispiels der erfindungsgemäßen Bürstendichtung;
- Fig. 5: eine geschnittene Ansicht eines zur Radialen angestellte Borsten aufweisenden Ausführungsbeispiels der erfindungsgemäßen Bürstendichtung und
- Fig. 6: eine geschnittene Ansicht eines zur Radialen angestellte Borsten aufweisenden, alternativen Ausführungsbeispiels der erfindungsgemäßen Bürstendichtung.

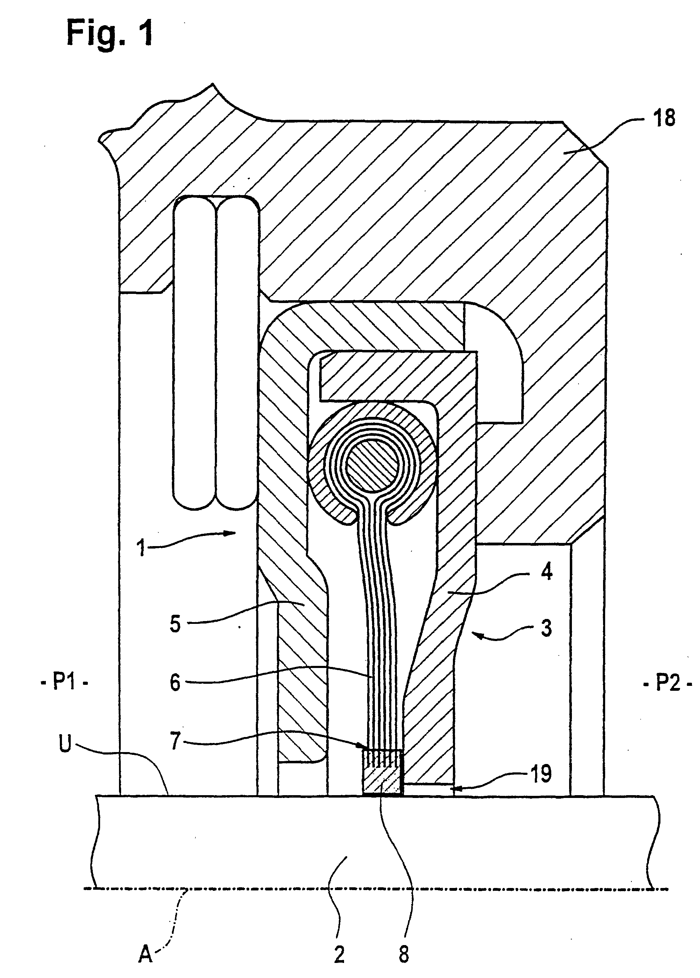

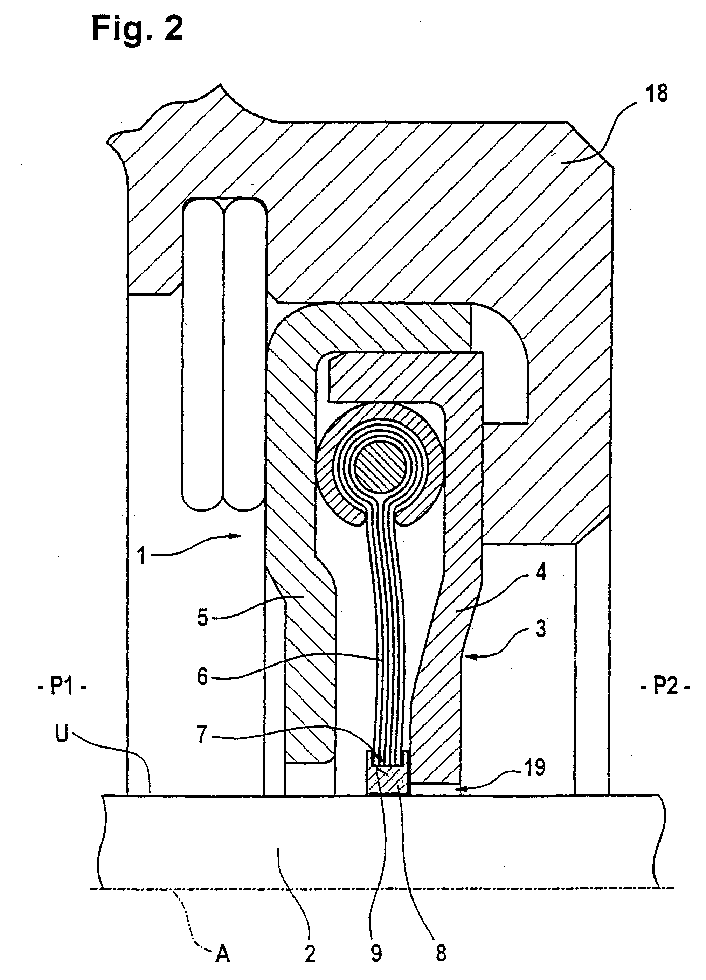

Fig. 1 zeigt schematisch eine Querschnittsansicht eines Ausführungsbeispiels einer im ganzen mit 1 bezeichneten Bürstendichtung, die Räume mit unterschiedlichen Drücken P1 und P2 durch Abdichtung eines Spalts 19 zwischen einem mit seiner Umfangsfläche U angedeuteten Rotor 2 und einem Stator 18, wie einem Gehäuse, abdichtet. Derartige Bürstendichtungen 1 haben in stationären Gasturbinen oder Flugtriebwerken zahlreiche Einsatzstellen. Die in Achsialrichtung der Gasturbine verlaufende Mittelachse ist in Fig. 1 und 2 mit A bezeichnet. Der Druck P1 ist größer als der Druck P2. Die Bürstendichtung 1 umfasst ein Borstengehäuse 3 mit einer niederdruckseitigen Stützplatte 4 und einer hochdruckseitigen Deckplatte 5 sowie Borsten 6, die in dem Borstengehäuse 3 auf geeignete Weise befestigt sind. Die Borsten 6 bestehen im allgemeinen aus Stahl. Bei dem vorliegenden Ausführungsbeispiel sind die Borsten 6 um einen Kern gewickelt, in einem zwischen der Stützplatte 4 und der Deckplatte 5 angeordneten Haltering eingespannt und erstrecken sich geradlinig zum Rotor 2. Die Stützplatte 4 und die Deckplatte 5 erstrecken sich um den Rotor 2 herum, weisen eine Innenbohrung auf, so dass der ringförmige Spalt 19 um den Rotor 2 von der Bürstendichtung 1 abzudichten ist.

Um die Bürstendichtung 1 im Hinblick auf ihre Dichtwirkung und das Verschleißverhalten der Borsten 6 zu optimieren, ist an ihren freien Enden 7 ein im Querschnitt dargestellter Gleitring 8 vorgesehen, der aus einem Material besteht, das bessere Gleiteigenschaften als Stahl, aus dem Borsten 6 bestehen, aufweist. Der Innendurchmesser des Gleitrings 8 entspricht im Betrieb bei maximaler Drehzahl und maximaler Temperatur dem Außendurchmesser des Rotors 2 und dichtet den ringförmigen Spalt 19 als geschlossenes Bauteil mit der ausgezeichneten Dichtwirkung eines Gleitrings flächig ab. Auf diese Weise wird die zwischen den einzelnen Borsten 6 einer Bürstendichtung 1 stets auftretende, geringe Leckage von Luft oder Dampf vermieden. Der Gleitring 8 ist an seiner gegen den Rotor 2 dichtenden Umfangsfläche und an einer Seitenfläche, die sich in der Ruheposition und insbesondere bei anliegendem Differenzdruck an der Stützfläche 4 abstützt, im allgemeinen durch Schleifen od.dgl. bearbeitet. Alternativ können die genannten Oberflächen des Gleitrings 8 bei der Herstellung, z.B. durch Sintern, bereits eine für eine Dichtfläche ausreichend glatte Oberfläche aufweisen.

Fig. 2 zeigt schematisch im Querschnitt ein alternatives Ausführungsbeispiel eines im ganzen mit 1 bezeichneten Bürstendichtung, die ein im wesentlichen aus einer Stützplatte 4 und einer Deckplatte 5 bestehendes Borstengehäuse 3 aufweist, in dem geradlinige Borsten 6 gehalten sind. Die freien Enden 7 der Borsten 6 sind zur Umfangsfläche U des Rotors 2 hin ausgerichtet und weisen einen Gleitring 8 auf, dessen innere Umfangsfläche gegen die Dichtfläche des Rotors 2 läuft und den ringförmigen Spalt 19 zum Rotor 2 als geschlossenes Bauteil flächig abdichtet. Der Innendurchmesser des Gleitrings 8 entspricht beim Betrieb bei maximaler Drehzahl und maximaler Temperatur in einer stationären Gasturbine oder einem Flugtriebwerk im wesentlichen dem Außendurchmesser des Rotors 2.

Der Gleitring 8 weist an seiner äußeren Umfangsfläche eine Aussparung 9 auf und ist im Querschnitt U-förmig ausgebildet. Die freien Enden 7 der Borsten 6 sind in der Aussparung 9 des Gleitrings 8 aufgenommen und dort durch ein geeignetes Verbindungsverfahren, z.B. durch Löten , an dem Gleitring 8 befestigt. Die Borsten 6 bleiben elastisch, weichen bei Auslenkungen des Rotors 2 aus und bewegen den Gleitring 8 mit.

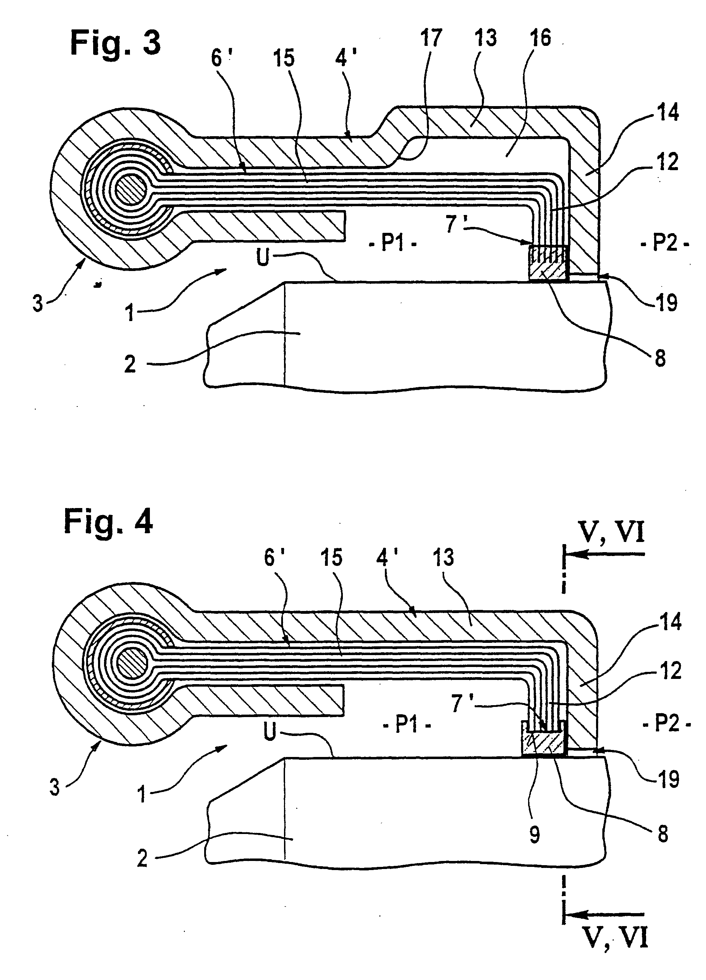

Fig. 3 zeigt schematisch eine Querschnittsansicht eines abgewinkelte Borstenabschnitte 12 aufweisenden Ausführungsbeipiels einer im ganzen mit 1 bezeichneten Bürstendichtung, die ein Borstengehäuse 3 mit einer einen Längsabschnitt 13 und einen dazu abgewinkelten Stützabschnitt 14 umfassenden Stützplatte 4' aufweist. Die abgewinkelten Borstenabschnitte 12 sind zur Einsparung von bei üblicher Anordnung radialem Bauraum zu Schaftabschnitten 15 der Borsten 6' im wesentlichen rechtwinklig abgewinkelt.

Zwischen den Schaftabschnitten 15 der Borsten 6' und der Stützplatte 4' ist ein Biegefreiraum 16 mit einer Biegekante 17 vorgesehen, in den die Schaftabschnitte 15 bei einer Auslenkung des Rotors 2, z.B. beim Hochlaufen der Gasturbine, abgelenkt werden können. Mit dieser Maßnahme werden die Vorteile eines geringen Bauraums und einer hohen Elastizität der Borsten 6' kombiniert.

An den freien Enden 7' der abgewinkelten Borstenabschnitte 12 ist ein Gleitring 8 vorgesehen, der gegen die Dichtfläche am Rotor 2 mit einer Umfangsfläche U abdichtet. Der Gleitring 8 besteht aus einem Material mit besseren Gleiteigenschaften aus Stahl, aus dem die Borsten 6' bestehen. Der Gleitring 8 besteht aus Kohle und wird durch Sintern als geschlossenes Bauteil an den freien Enden 7' der abgewinkelten Borstenabschnitte 12 vorgesehen. Zur Optimierung der Dichtwirkung wird die innere Umfangsfläche des Gleitrings 8 im allgemeinen durch Schleifen od. dgl. bearbeitet, um eine Oberfläche mit möglichst geringer Rauhigkeit zu erzielen. Auch die sich am Stützabschnitt 14 der Stützplatte 4' abstützende Seitenfläche des Gleitrings 8 wird durch Schleifen od. dgl. nachbearbeitet, um niederdruckseitig eine möglichst ebene Anlagefläche zu erzielen und ein ungewolltes Festhaften der Borsten 6 ' an der Stützplatte 4' zu vermeiden.

Fig. 4 zeigt eine ähnliche Bürstendichtung wie Fig. 3 mit einer einen Längsabschnitt 13 und einen Stützabschnitt 14 umfassenden Stützplatte 4' sowie Borsten 6', die im Borstengehäuse 3 befestigte Schaftabschnitte 15 und dazu im wesentlichen rechtwinklig abgewinkelte Borstenabschnitte 12 umfassen. Die freien Enden 7' der abgewinkelten Borstenabschnitte 12 sind zur Umfangsfläche U des Rotors 2 hin ausgerichtet. Der an den freien Enden 7' der abgewinkelten Borstenabschnitte 12 vorgesehene Gleitring 8 ist einstückig ausgebildet und als separates Bauteil hergestellt. Der Gleitring 8 weist an seiner äusseren Umfangsfläche eine Aussparung 9 auf, in der die freien Enden 7' der abgewinkelten Borstenabschnitte 12 aufgenommen und durch ein geeignetes Verfahren, wie z.B. durch Löten, befestigt sind.

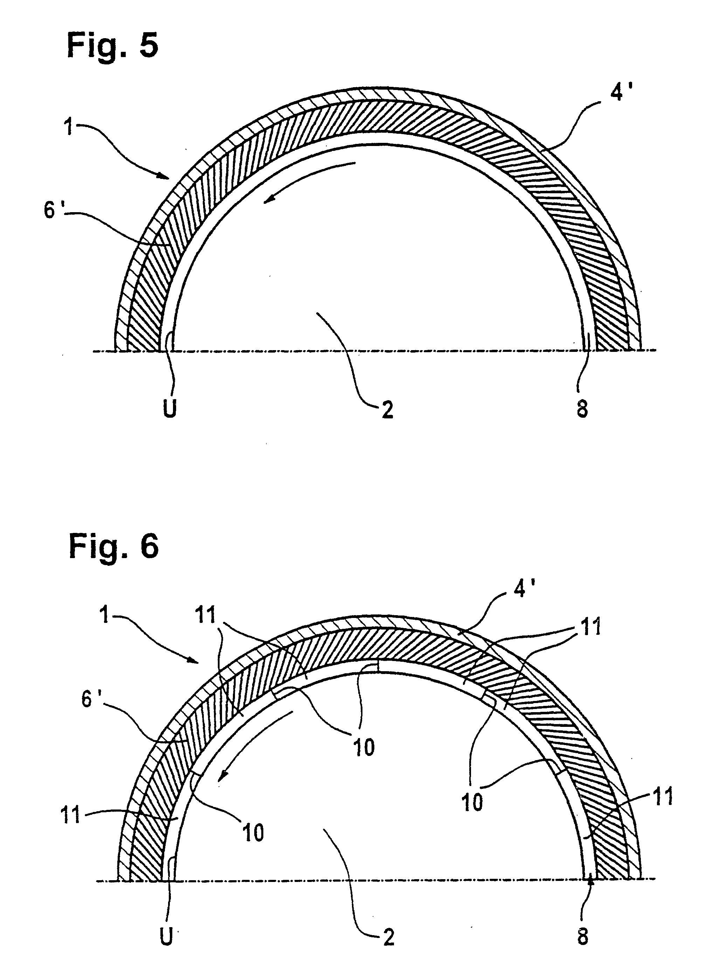

Fig. 5 zeigt schematisch eine geschnittene Ansicht des in Fig. 4 dargestellte Ausführungsbeipiels einer Bürstendichtung 1, die sich von dem in Fig. 3 dargestellten Ausführungsbeispiel insbesondere durch Fehlen des Biegefreiraums 16 zwischen der Stützplatte 4' und dem Schaftabschnitt 15 der Borsten 6 unterscheidet. Das elastische Verhalten des Ausführungsbeipiels der in Fig. 4 und 5 dargestellten Bürstendichtung wird durch Anstellen der abgewinkelten Borstenabschnitte bis zu 45 ° zur Radialen in der Weise erzeugt, dass bei einer Auslenkung des Rotors 2 die Schaftabschnitte 15 der Borsten 6' tordiert und anschließend infolge ihrer Rückstellkraft in die ursprüngliche Position zurückbewegt werden. Die Drehrichtung des Rotors 2 ist in Fig. 5 und 6 mit einem Pfeil dargestellt.

Die abgewinkelten Borstenabschnitte 12 können auch bei dem in Fig. 3 gezeigten Ausführungsbeispiel einer Bürstendichtung 1 mit einem Biegefreiraum 16 zwischen der Stützplatte 4' und den Schaftabschnitten 15 der Borsten 6' zur Radialen in einem Winkel bis zu etwa 45 ° angestellt sein. Eine solche Bürstendichtung erweist sich bei Auslenkungen des Rotors 2 als besonders elastisch, da die Schaftabschnitte 15 der Borsten 6' einerseits durch Biegen in den Biegefreiraum 16 und andererseits durch Torsion ausweichen und durch die überlagerten Rückstellkräfte anschließend in ihre ursprüngliche Position zurückbewegt werden können. Der an den freien Enden 7' der abgewinkelten Borstenabschnitte 12 vorgesehene Gleitring 8 kann unter Ausnutzung des elastischen Verhaltens der Bürstendichtung 1 auch bei Auslenkung des Rotors 2 als geschlossenes Bauteil eine optimale Abdichtung des ringförmigen Spalts 19 gewährleisten.

Fig. 6 zeigt schematisch eine Ansicht gemäß Schnittlinie aus Fig. 4 einer Bürstendichtung 1, die in alternativer Ausgestaltung einen segmentierten, d.h. mehrstückig ausgebildeten Gleitring 8 aufweist. Durch die Trennlinien 10 wird der Gleitring 8 in mehrere gleichgroße Gleitringabschnitte 11 getrennt. Der segmentierte Gleitring 8 passt sich etwaigen Auslenkungen des nicht dargestellten Stators oder Rotors 2, z.B. beim Anlaufen der Gasturbine, unter Ausnutzung der elastischen Eigenschaften der Borsten 6 bzw. 6' einer Bürstendichtung 1 an. Der segmentierte Gleitring 8 eignet sich auch besonders gut für die in Fig. 1 und 2 dargestellten Bürstendichtungen 1 mit geradlinigen Borsten 6, deren Borsten 6 im allgemeinen in einem Winkel bis zu etwa 45° zur Radialen angestellt sind.

Bei allen Ausführungsbeispielen können die Borsten 6, 6' zur weiteren Verbesserung der Dichtwirkung, insbesondere für den Einsatz der Bürstendichtungen 1 in einer feuchten Umgebung, wie Wasserdampf, in einer Silicon-, Silicard- oder Teflondispersion od.dgl. getränkt sein, da sich Silicon, Silicard und Teflon an den Borsten 6, 6' anlagert, dazwischenliegenden Freiräume im wesentlichen schließt, die Borsten 6, 6' jedoch, in gewissen Grenzen, beweglich und elastisch bleiben und sich Auslenkungen des Stators 18 oder Rotors 2 anpassen können. Die verwendeten Mittel sind in Abhängigkeit von den auftretenden Temperaturen auszuwählen.

## Patentansprüche

1. Bürstendichtung, zum Abdichten eines Rotors (2) gegen einen Stator (18) umfassend ein am Rotor (2) oder Stator (18) gehaltenes, eine Stützplatte (4, 4') aufweisendes Borstengehäuse (3) zur Befestigung von Borsten (6, 6'), die mit ihren freien Enden (7, 7') zum Stator (18) oder Rotor (2) ausgerichtet sind, **dadurch gekennzeichnet, dass** die freien Enden (7, 7') der Borsten (6, 6') mit einem Gleitring (8) versehen sind.

2. Bürstendichtung nach Anspruch 1, **dadurch gekennzeichnet, dass** der Gleitring (8) aus Kohle oder einem Sintermetall besteht.

3. Bürstendichtung nach Anspruch 1 oder 2, **dadurch gekennzeichnet, dass** der Gleitring (8) segmentiert ist.

4. Bürstendichtung nach einem oder mehreren der vorhergehenden Ansprüche **dadurch gekennzeichnet, dass** der Gleitring (8) an die freien Enden (7, 7') der Borsten (6, 6') gesintert ist.

5. Bürstendichtung nach einem oder mehreren der vorhergehenden Ansprüche, **dadurch gekennzeichnet, dass** der Gleitring (8) entlang einer Umfangsfläche eine Aussparung (9) aufweist, in der die freien Enden (7, 7') der Borsten (6, 6') aufgenommen und befestigt sind.

6. Bürstendichtung nach einem oder mehreren der vorhergehenden Ansprüche, **dadurch gekennzeichnet, dass** eine gegen den Rotor (2) oder Stator (18) abdichtende Umfangsfläche und/oder eine sich an der Stützplatte (4) abstützende Seitenfläche des Gleitrings (8) bearbeitet ist.

7. Bürstendichtung nach einem oder mehreren der vorhergehendne Ansprüche, **dadurch gekennzeichnet, dass** die Borsten (6, 6 ') über ihre gesamte Länge geradlinig sind.

8. Bürstendichtung nach einem oder mehreren der Ansprüche 1 bis 7, **dadurch gekennzeichnet, dass** die Borsten (6 ') Schaftabschnitte (15) und dazu abgewinkelte Borstenabschnitte (12) umfassen, deren freien Enden (7 ') zum Rotor (2) oder Stator (18) ausgerichtet sind.

9. Bürstendichtung nach Anspruch 8, **dadurch gekennzeichnet, dass** die Stützplatte (4') einen Längsabschnitt (13) und einen dazu abgewinkelten Stützabschnitt (14) aufweist.

10. Bürstendichtung nach Anspruch 8 oder 9, **dadurch gekennzeichnet, dass** die abgewinkelten Borstenabschnitte (12) zu den Schaftabschnitten (15) der Borsten (6') und der Stützabschnitt (14) zum Längsabschnitt (15) der Stützplatte (4') im wesentlichen rechtwinklig abgewinkelt sind.

11. Bürstendichtung nach einem oder mehreren der Ansprüche 8 bis 10, **dadurch gekennzeichnet, dass** zwischen den Schaftabschnitten (15) der Borsten (6') und der Stützplatte (4') ein Biegefreiraum (16) mit einem als Biegekante wirkenden Anschlag (17) ausgebildet ist.

12. Bürstendichtung nach einem oder mehreren der vorhergehenden Ansprüche, **dadurch gekennzeichnet, dass** die Borsten (6, 6 ') in einem Winkel bis zu 45 ° zur Radialen angestellt sind.

13. Bürstendichtung nach einem oder mehreren der vorhergehenden Ansprüche, **dadurch gekennzeichnet, dass** die Borsten (6, 6') in einer Silicon- oder Silicardoder Teflondispersion getränkt sind.

## Claims

1. Brush seal for sealing a rotor (2) off from a stator (18), comprising a bristle housing (3) with a backing plate (4, 4') retained on the rotor (2) or stator (18) for securing the bristles (6,6'), the free ends (7, 7') of which are oriented towards the stator (18) or rotor (2), **characterised in that** the free ends (7, 7') of the bristles (6, 6') are provided with a floating ring (8).

2. Brush seal as claimed in claim 1, **characterised in that** the floating ring (8) is made from carbon or a sintered metal.

3. Brush seal as claimed in claim 1 or 2, **characterised in that** the floating ring (8) is segmented.

4. Brush seal as claimed in one or more of the preceding claims, **characterised in that** the floating ring (8) is sintered onto the free ends (7, 7') of the bristles (6, 6').

5. Brush seal as claimed in one or more of the preceding claims, **characterised in that** the floating ring (8) has a recess along a peripheral face, in which the free ends (7, 7') of the bristles (6,6') are accommodated and secured.

6. Brush seal as claimed in one or more of the preceding claims, **characterised in that** a peripheral face of the floating ring (8) providing a seal with the rotor (2) or stator (18) and/or an end face supported on the backing plate (4) is treated.

7. Brush seal as claimed in one or more of the preceding claims, **characterised in that** the bristles (6, 6') are straight across their entire length.

8. Brush seal as claimed in one or more of claims 1 to 7, **characterised in that** the bristles (6') have straight portions (15) and bristle portions (12) inclined at an angle thereto, the free ends (7') of which are oriented towards the rotor (2) or stator (18).

9. Brush seal as claimed in claim 8, **characterised in that** the backing plate (4') has a longitudinal portion (13) and a backing portion (14) inclined at an angle thereto.

10. Brush seal as claimed in claim 8 or 9, **characterised in that** the angled bristle portions (12) are angled substantially at a right angle to the straight portions (15) of the bristles (6') and the backing portion (14) is angled substantial at a right angle to the longitudinal portion (15) of the backing plate (4').

11. Brush seal as claimed in one or more of claims 8 to 10, **characterised in that** a bending space (16) is left free between the straight portions (15) of the bristles (6') and the backing plate (4') with a shoulder (17) acting as a bending edge.

12. Brush seal as claimed in one or more of the preceding claims, **characterised in that** the bristles (6, 6') are disposed at an angle of up to 45° in the radial direction.

13. Brush seal as claimed in one or more of the preceding claims, **characterised in that** the bristles (6, 6') are immersed in a silicone or silicard or Teflon dispersion.

## Revendications

1. Joint brosse pour assurer l'étanchéité d'un rotor (2) par rapport à un stator (18) comprenant un boîtier de brosse (3), qui est maintenu sur le rotor (2) ou sur le stator (18), qui comprend une plaque de soutien (4, 4') et qui sert à fixer des poils (6, 6'), dont les extrémités libres (7, 7') sont dirigées vers le stator (18) ou vers le rotor (2), **caractérisé en ce que** les extrémités libres (7, 7') des poils (6, 6') sont munies d'un anneau de glissement (8).

2. Joint brosse selon la revendication 1, **caractérisé en ce que** l'anneau de glissement (8) se compose de carbone ou d'un métal fritté.

3. Joint brosse selon la revendication 1 ou 2, **caractérisé en ce que** l'anneau de glissement (8) est segmenté.

4. Joint brosse selon l'une quelconque ou plusieurs des revendications précédentes, **caractérisé en ce que** l'anneau de glissement (8) est fritté aux extrémités libres (7, 7') des poils (6, 6').

5. Joint brosse selon l'une quelconque ou plusieurs des revendications précédentes, **caractérisé en ce que** l'anneau de glissement (8) comprend le long d'une surface périphérique un évidement (9), dans lequel sont logées et fixées les extrémités libres (7, 7') des poils (6, 6').

6. Joint brosse selon l'une quelconque ou plusieurs des revendications précédentes, **caractérisé en ce qu'**une surface périphérique de l'anneau de glissement (8) assurant une étanchéité avec le rotor (2) ou avec le stator (18) et/ou une surface latérale de l'anneau de glissement (8) s'appuyant sur la plaque de soutien (4) font l'objet d'un traitement .

7. Joint brosse selon l'une quelconque ou plusieurs des revendications précédentes, **caractérisé en ce que** les poils (6, 6') sont rectilignes sur toute leur longueur.

8. Joint brosse selon l'une quelconque ou plusieurs des revendications 1 à 7, **caractérisé en ce que** les poils (6') comprennent des tronçons de tiges (15) et des tronçons de poils (12) recourbés par rapport à ceux-ci et dont les extrémités libres (7') sont dirigées vers le rotor (2) ou vers le stator (18).

9. Joint brosse selon la revendication 8, **caractérisé en ce que** la plaque de soutien (4') comprend un tronçon longitudinal (13) et un tronçon de soutien (14) recourbé par rapport à celui-ci.

10. Joint brosse selon la revendication 8 ou 9, **caractérisé en ce que** le recourbement des tronçons de poils (12) par rapport aux tronçons de tiges (15) des poils (6') et celui du tronçon de soutien (14) par rapport au tronçon longitudinal (15) de la plaque de soutien (4') sont sensiblement réalisés à angle droit.

11. Joint brosse selon l'une quelconque ou plusieurs des revendications 8 à 10, **caractérisé en ce qu'**entre les tronçons de tiges (15) des poils (6') et la plaque de soutien (4') est formé un espace libre de recourbement (16) avec une butée (17) agissant comme bord de recourbement.

12. Joint brosse selon l'une quelconque ou plusieurs des revendications précédentes, **caractérisé en ce que** les poils (6, 6') ont une incidence par rapport au sens radial présentant un angle jusqu'à 45°.

13. Joint brosse selon l'une quelconque ou plusieurs des revendications précédentes, **caractérisé en ce que** les poils (6, 6') sont imprégnés dans une dispersion de silicone, de silicarde ou de téflon.
